# EUROPEAN PATENT SPECIFICATION

(11) **EP 1 422 949 B1**
(45) Date of publication and mention of the grant of the patent: **20.10.2004**
(21) Application number: 02360319.4
(22) Date of filing: 20.11.2002
(51) Int. Cl.: H04Q 3/00

(54) **Method and system for providing services**
Verfahren und System zur Dienstbereitstellung
Méthode et système pour fournir des services

(43) Date of publication of application: 26.05.2004
(73) Proprietor: ALCATEL, 75008 Paris (FR)
(72) Inventor: Banet, Franz-Josef, Dipl.-Ing., 71665 Vaihingen/Enz (DE); Lopez Aladros, Rodolfo, Dipl.Phys., 70329 Stuttgart (DE); Lautenschlager, Wolfgang, Dipl.-Ing., 71287 Weissach-Flacht (DE)
(74) Representative: LOUIS- PÖHLAU- LOHRENTZ

(56) References cited:
- EP-A- 0 892 530
- EP-A- 1 107 537
- WO-A-00/22842

## Description

The invention is related to a method for providing services to terminals of a communication network, a service provision system for use with the communication network to support the provisioning of services to terminals of the communication network, wherein the communication network comprises a plurality of network elements, and to a network element for use with a communication network to provide telecommunication services to a plurality of terminals.

In modern telecommunication networks, it has become more and more important to be able to provide enhanced telecommunication services. A typical enhanced service is a conditional call forwarding which requires an analysis of the call situation and routs the call on the basis of the stored service profile of the call forwarding. To provide such kind of services, the so-called IN network architecture is used (IN = intelligent network). This architecture can be incorporated in the basic network and makes the implementation and controlling of services faster, easier and more flexible. This is achieved by moving the service control out of the switching exchange into a separate functional unit called service control point (SCP).

For fixed networks, CCITT Q.1290 proposes following IN architecture: A service control point communicates with a plurality of service switching points (SSP). A service switching point is an exchange fulfilling a service switching function (SSF) which recognizes trigger definitions of intelligent network services and activate an interaction with the service control point when detecting the fulfillment of trigger criteria. The number 7 signaling system (SS7) and the TCAP protocol (TCAP = Transaction Capabilities Application Part) is used for the communication between the service switching points and the service control point.

Further, it is known to use the IN architecture for wireless communication networks. A mobility controller is provided to enable access by mobile subscribers in a cellular telecommunications network. The cellular telecommunications network includes a home location register (HLR) which includes a data base of subscriber information including location information and a subscriber profile. The HLR and the SCP communicate via a TCAP-based communications protocol.

But, each of the above described presently available service provision architectures base on service nodes and network nodes which use each dedicated storage equipment allocated to every network node and every service node.

Further, WO 00/22842 describes an IN-system that includes a resource broker. Communications between resource locators assigned to service control points is mediated by the resource broker. The resource broker includes a data interface arranged to received capability data and interface data from respective resource locators, and a registry arranged to store said capability data and interface data. A resource locator initially reads capability data and interface data of other components from the resource broker and subsequently communicates further data directly with these components using the interface of the component identified in this interface data.

It is the object of the present invention to improve the provisioning of services within communication networks.

The object of the present invention is achieved by a method for providing services to terminals of a communication network, wherein a first service element assigned to a corresponding network element of the communication network contacts a service description server, the service description server offers a service address of a corresponding second service element to the first service element, the first service element contacts the second service element, the second service element generates service data, transmits said service data to a central service data element and returns a resource address to the first service element, and the first service element accessing said service data by transmitting said resource address to said service data element. The object of the present invention is further achieved by a service provision system for use with a communications network to support the provisioning of services to terminals of the communication network, wherein the communication network comprises a plurality of network elements, the service provision system comprising: a description server for offering service addresses of second service elements to first service elements assigned to network elements of the communication network; several second service elements for providing services to first service elements; and a central service data element for holding service data of the second service elements. The object of the present invention is further achieved by a network element for use with a communication network to provide telecommunication services to a plurality of terminals, the network element comprising one or several first service elements each adapted for: contacting a description server which offers service addresses of a plurality of second service elements; contacting one or several of the second service elements; and accessing service data assigned to second service elements by invoking a central service data element.

Various advantages are achieved by this invention: Service creation and provisioning becomes more efficient and the integration of new services is simplified. For implementing new services, it is no longer necessary to amend the software of a plurality of network elements. The data flows are separated from the control flows. The data flow architecture as well as the control flow architecture is harmonized. Data are centralized which simplifies the provisioning of security and safety features and increases the efficiency of the whole data holding system. Further, data may be reused or shared by different service elements which simplifies the cooperation of service elements, decreases costs of service element development and improves the consistency of the whole system. Further, no reconfiguration of existing network structures is necessary for launching new services. New services can easily be introduced as add-on. Such an add-on contains new processes and new data objects. Further, the consistency of data is easier to realize than in the present distributed environment of different data bases assigned to different network nodes and different service nodes. Further, data are consolidated in a homogenous database which provides a high availability, high guaranty against data loss and simplified back-up features.

Further advantages are achieved by the embodiments indicated by the dependent claims.

According to a preferred embodiment of the invention, the service provision system comprises one or several servers, each server providing one or several of the second service elements. The second service elements are service applications providing telecommunication services and the first service elements are network element applications. An efficient and powerful system for providing a telecommunication services is achieved by implementing such kind of architecture.

The introduction of new services and the self-configuration of new telecommunication services are improved by the following feature: The second service element contacts the description server for performing a service registration process. After registration, the description server offers the service address and a corresponding service description of the respective registered second service element. Further, it is also possible that a part of the data offered by the central service data element are registered and in the following offered by the description server as available service of the service provision system.

According to a further preferred detailed embodiment of the invention, the service process is separated from the service data. Service data are not longer property of a single process. Service data is accessible for all relevant processes and managed by the central service data element. The central service data element is adapted to administrate and store service data of the second service elements, wherein stored service data are data of service functions of the respective second service elements separated from the respective service functions and stored separately from the respective service functions. The second service elements are adapted to access data of service functions by invoking the central service data element via a common interface. Preferably, data are defined as objects which are accessible to all relevant processes. To introduce a new service, a new second service element comprising a new process is registered and new data objects are incorporated in the data administrated by the central service data element.

Preferably, the central service data element provides data according to a common data model.

Further advantages are achieved by implementing security features. This improves the reliability, safety and security of the whole system.

These advantages are achieved by having a second service element comprising a security element assigning access rights to first service elements.

Further, it is possible to introduce a service security element. This service security element provides security tickets to first service elements. Second service elements grant access rights according to these security tickets.

According to a further preferred embodiment of the invention, the first service elements interact with second service elements via a first interface and interact with the central service data element via a different second interface. Each of these interfaces is adapted to the specific functionality which improves the efficiency and response time of the whole system.

The need to reconfigure existing service elements when introducing a new service element is avoided by the implementation of following concept:

A first network element selects one or several service elements by means of service description information received from the description server. It receives a service address of the selected second service element. It accesses the server addressed by the received service address and fetching a service descriptor of the selected second service element. The service descriptor describes how to communicate with the second service element. Then, it invokes the second service element by means of the fetched service descriptor. In the following, the first service element may access this second service element without further accessing the description server. Having the information of the service descriptor, it has all necessary information to invoke the service provided by this second service element.

These as well as other features and advantages of the invention will be better appreciated by reading the following detailed description of presently preferred exemplary embodiments taken in conjunction with accompanying drawings of which:
- Fig.1: is a block diagram which shows a communication network with a service provision system according to the invention.
- Fig. 2: is a block diagram which shows the detailed structure of the service provision system of fig. 1.
- Fig. 3: is a block diagram which shows a part of the service provision system of fig. 2.
- Fig. 4: is a flow diagram showing the communication between elements of the service provision system of fig. 1.

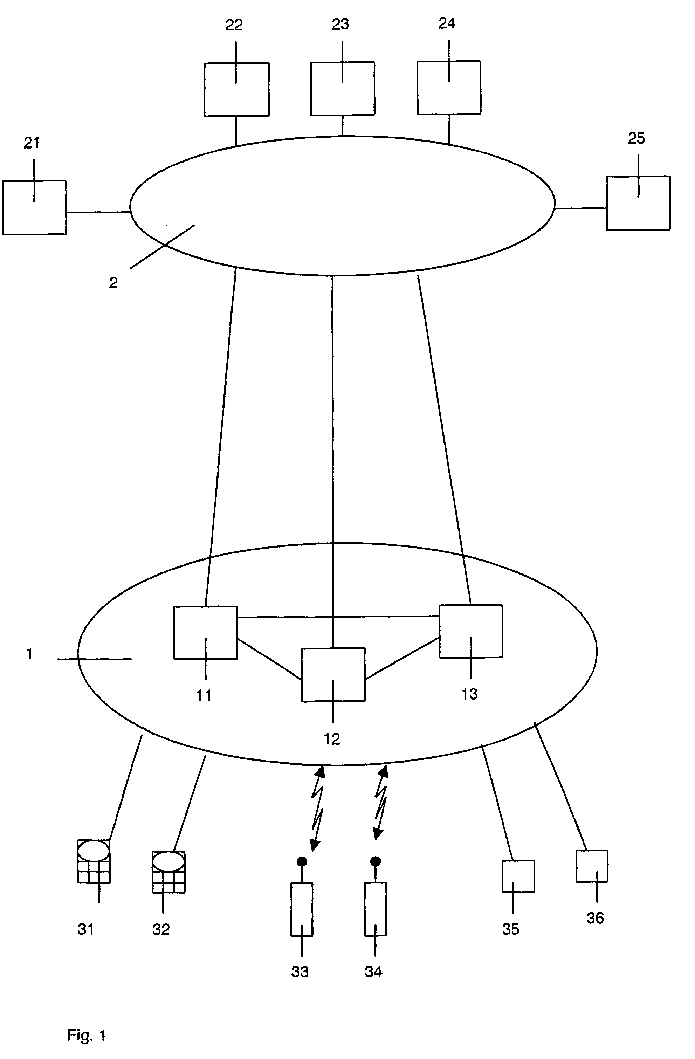

Fig. 1 shows a communication system 1, a plurality of terminals 31 to 36 connected to the communication network 1, a communication network 2 and several servers 21 to 25 connected with the communication network 2.

The communication network 1 is a telecommunications network which provides telecommunication services to the terminals 31 to 36. For example, the communications network 1 is constituted by several fixed circuit switched networks and mobile circuit switched networks which may be assigned to different network operators or may base on a different technology. Fixed networks may be PSTN networks or ISDN networks (PSTN = Public Switched Telecommunications Network; ISDN = Integrated Services Digital Network). Mobile networks may be cellular networks as GSM networks or UMTS networks (GSM = Global System for Mobile Communication; UMTS = Universal Mobile Telecommunications System). Further, it is possible that the communications network 1 provides beside circuit switched communication services also packet switched communication services dedicated to the transportation of data traffic.

Beside data transport services, the communication network 1 provides further enhanced telecommunication services to the terminals 31 to 36. Such services might be routing services, messaging services, information services etc.

The terminals 31 to 36 are terminals adapted to communicate with the communications network 1. The terminals 31 and 32 are computers connected via digital subscriber lines with the communications network 1. The terminals 33 and 34 are cellular mobile phones communicating with the communications network 1 via an air interface. The terminals 35 and 36 are PSTN telephone sets connected with the communications network 1 over a respective subscriber line.

The servers 21 to 25 are respectively formed by one or several interconnected computers constituting a hardware platform, a software platform and a plurality application programs executed based on the system platform provided by the hardware and software platform.

The communication network 2 is a data network. For example, this data network is an IP network, which uses an IP protocol as level 3 protocol (IP = Internet Protocol). Physically, the data network 2 may be formed by several ATM-networks and ETHERNET networks (ATM = Asynchronous Transfer Mode). These physical networks may use different MAC protocols (MAC = Medium Access Protocol). Further, the TCP/IP protocol stack (TCP = Transmission Control Protocol) may be used to enable the communication between the servers 21 and 25.

The communications network 1 comprises a plurality of network elements which provide the network functionalities necessary to provide the communication services offered by the communications network 1. Network elements are for example exchanges, routers or gateways.

But, it is also possible that network elements are network service nodes, network management nodes or service management nodes.

Fig. 1 shows three of such network elements, namely the network elements 11, 12 and 13. The network elements 11 and 12 are mobile switching centers (MSC) and the network element 13 is a local exchange. The network elements 11 to 13 are connected with the communication network 2.

The network elements 11 to 13 may contain functions for processing the TCP/IP protocol stack to be able to communicate with the servers 21 to 25. Further, it is possible that the network elements 11 to 13 communicate via the Number 7 signaling protocol and are linked with the communication network 2 through a gateway performing the necessary protocol conversions.

Further, the network elements 11 to 13 comprise one or several first service elements assigned to the respective network element.

The servers 22 to 24 respectively comprise one or several second service elements. The number of the servers 22 to 24 may be changed dependent on the number of second service elements desired to be provided by the communication network 1. The server 21 is a description server offering service addresses of second service elements to first service elements assigned to network elements of the communication network 1. The server 25 provides a central service data element for holding service data of the second service elements.

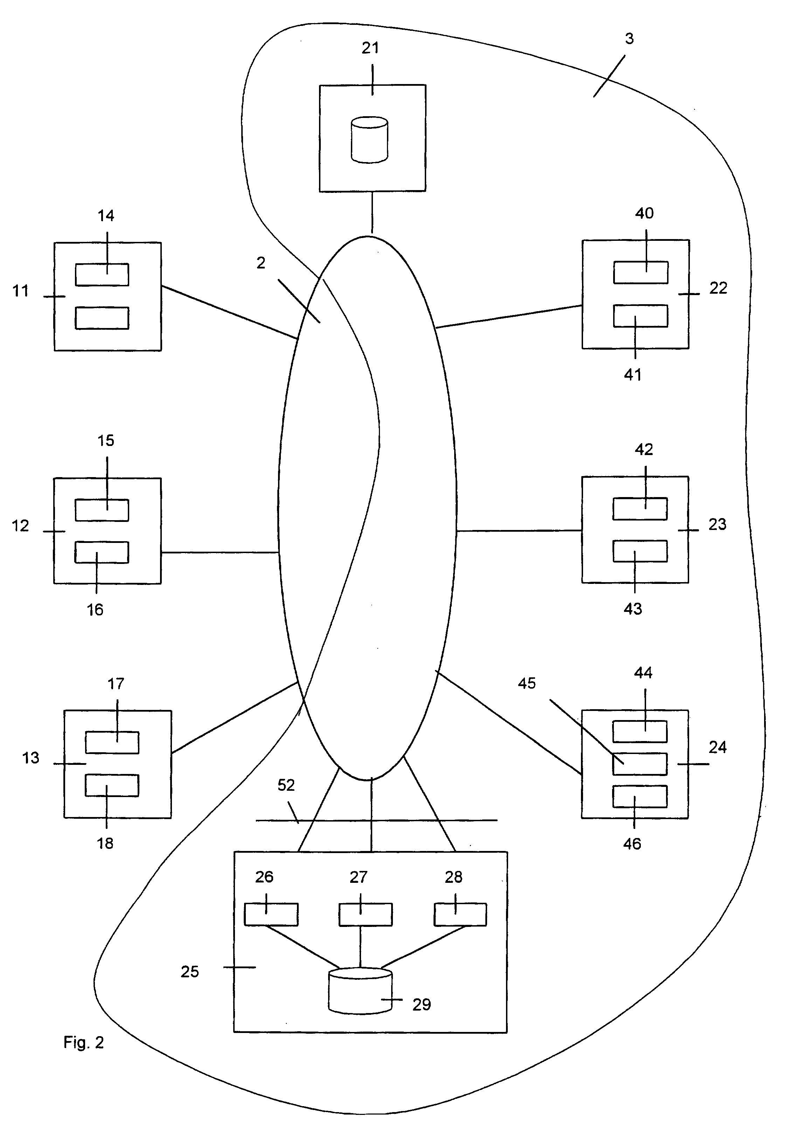

The details of the network elements 11 to 13 and the servers 21 to 25 are now described by hand of fig. 2.

Fig. 2 shows the communications network 2, the servers 21 to 25 and the network elements 11 to 13.

The network elements 11 to 13 comprise service elements 14, 15 and 16, and 17 and 18, respectively.

The service elements 14 to 18 are network element applications executed by the corresponding system platform of the respective network elements 11 to 13. The service elements 14 to 18 fulfill a corresponding network function within the respective network element 11 to 13. Further, they may perform proxy functionality for enhanced telecommunication services provided by the communication network 1. For example, the service elements 14 to 18 may be a SSF functionality, a CSCF functionality, a MSC functionality or a HLR proxy, a VLR proxy, a SMSC proxy, a SCP proxy, a MSC proxy or a CSCF proxy (MSC = mobile switching center; HLR = home location register; VLR = visitor location register; SCP = service control point; SSF = service switching functionality; CSCF = call state control function; SMSC = short message service center).

The servers 21 to 25 forms a service provision system 3. The servers 22 to 24 comprise service elements 40 and 41, 42 and 43, and 44 to 46, respectively.

The service elements 40 to 46 are service applications providing telecommunication services. For example, the service elements 40 to 46 respectively provide one of the following functions: mobility service, GPRS service, WAP service, VLR functionality, SMS function, CRM function, BSS function, location service or maintenance service (GPRS = general packet radio service; WAP = wireless access protocol; SMS = short message service; CRM = customer relationship management; BSS = base station subsystem).

Further, the service elements 40 to 46 can be formed by service elements comprising the service logic of enhanced telecommunication services, for example a universal number service, a customer information service, a traffic information service, location based services and so on.

Further, it is possible that the service elements 40 to 46 are network management functionalities, service management functionalities or business applications.

Further, it is possible that some of the service elements 40 to 46 provide specialized service application functions and some of the service elements 40 to 46 provide common service functions. The common service functions may be accessed and used by the specialized service application functions. That means that one of the service elements 40 to 46 invokes another one of the service elements 40 to 46 for requesting service provisioning. A service element may therefore play the role of a first and of a second service element.

The server 25 provides a central service data element. It comprises several data base service functions 26 to 28 and a common data base 29. Each of the data base service functions 26 to 28 provides access to the commoner data base 29.

It is possible to replace the server 25 by several locally distributed servers, each holding the data base 29. These distributed servers are synchronized to hold the data base 29 consistent.

For example, the server 25 is a storage area network (SAN) which provides a standardized way to hold the data based 29 consistent.

The server 21 and 40 to 44 provides a first access interface and the server 25 provides a second access interface 52.

Each of the service elements 14 to 18 perform following functionalities:

It contains functions for contacting the description server 21. By help of this contact, it gathers information about the service elements 40 to 46.The description server 21 offers service addresses of the service elements 40 to 46.

Further, it contains functions for contacting one or several of the service elements 40 to 46. By help of this contact, it triggers the provisioning of telecommunication services.

Further, it contains functions for accessing service data assigned to the service elements 40 to 46 by invoking the central service data element provided by the server 25.

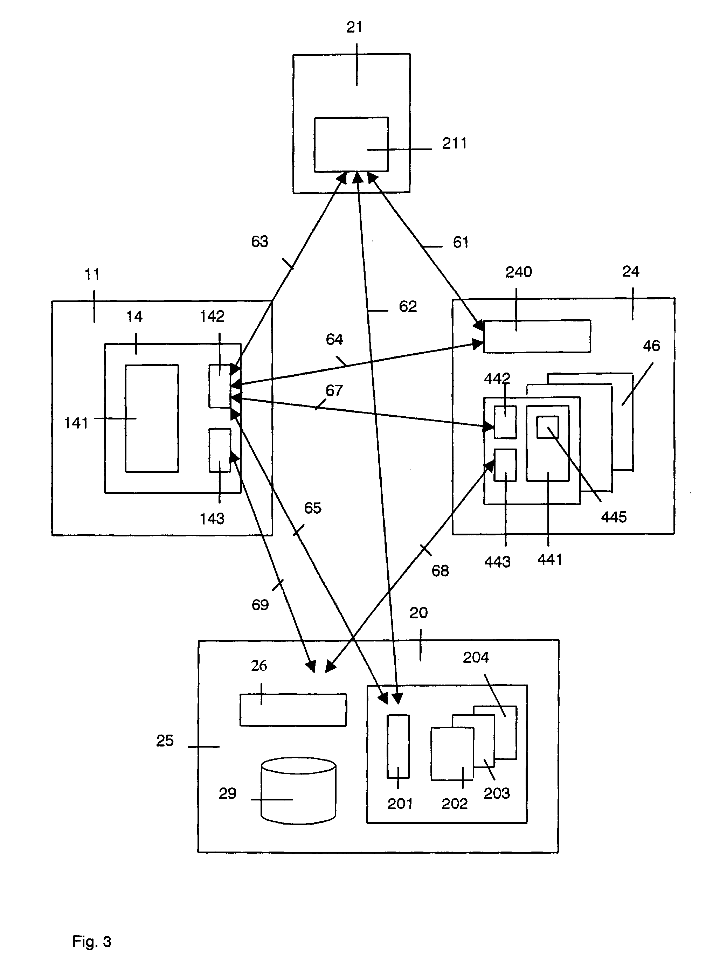

The details of the above described system are in the following described by hand of fig. 3.

Fig. 3 shows the network element 11 and the servers 21, 24 and 25. The server 21 is a description server, the server 24 is a service element server and the server 25 is a service data server.

The server 25 comprises the database service function 26, the data base 29 and a service element 20. The database service function 26 and the data base 29 provide the central service data element which manages and administrates service data stored in the database 29.

The description server 21 comprises a control unit 211. Further, it may comprise a database, which contains service addresses and descriptions of registered service elements. But, according to a preferred embodiment of the invention, all data of the description server 21 are stored and administrated by the data base server 25. As described for the server 24, the data of the description service offered by the server 21 is separated from the processes of this service. The data are hold by the service data element provided by the server 25 and the service processes and functions are performed by the description server 21.

The control unit 211 offers the above mentioned information to the service elements 14 to 18 and controls the registration of service elements, for example of the service elements 40 to 46.

The network element 11 comprises the service element 14 which is a MSC network function. From functional point of view, the service element 14 comprises a control unit 141 and two interface units 142 and 143.

The server 24 comprises the service elements 44 to 46 and a control unit 240. The service element 44 provides a HLR service. From the functional point of view, it comprises a service logic 441 and two interface units 442 and 443.

The data of the HLR functionality is separated from the processes of the HLR functionality. The code implementing the processes of the HLR functionality constitutes the service logic 441. The associated service data of the HLR functionality is stored in the database 29. These data may be encoded as objects.

Further, the database 29 stores the data according to a common data model which is known to all the service elements 41 and 46. Accordingly, the data of the HLR functionality is encoded according to this common data model and stored, following the data structure of this data model. This makes it possible that the data of the HLR functionality may be not only accessed, used and understood by the service element 44, but also by all other service elements 40, 41, 42, 43, 45 and 46.

The service logic 441 contains all the processes and therefore all of the functions of the HLR functionality. The processes/ functions have to access the corresponding service data of the HLR functionality. This is done by mean of the interface unit 443 which provides the necessary functions to communicate with the control unit 26 of the common service data element via the interface 52. For example, SQL, XML or CORBA interactions (SQL = System Query Language; CORBA = Common Object Request Broker Architecture) are used to perform this communication. Further, it is also possible to use the SOAP protocol (SOAP = Service Oriented Architecture Protocol). Preferably, the used communication protocol is adapted to provide a fast access to the data of the database 29.

Further, the service logic 441 communicates via the interface unit 442 with other service elements. These service elements may be the first service elements 14 to 18 or the second service elements 40 to 46. The interface unit 442 communicates via a protocol that is different from that of the interface unit 43. It may use the SOAP protocol which is designed for the provisioning of WEB-services. Further, it is possible to use CORBA based protocols, DCOM based protocols (DCOM = distributed common object model) or Java based protocols and frameworks.

The interface unit 142 of the service element 14 and the control unit 211 of the description server 21 comprise the same functionalities as the interface unit 442 of the service element 44, which makes it possible that the service elements 44, 14 and the description server 21 communicate via the above described framework.

The interface unit 143 of the service element 14 comprises the same functionalities as the interface unit 443 of the service element 44, which enables the service element 14 to retrieve data stored in the data base 29.

The control unit 240 performs the registration of the service elements 44, 45 and 46 of the server 24. It comprises the same functionalities as the interface unit 442 and is able to communicate with the description server 21 and with the service elements 14 to 18. If the control unit 240 recognizes the creation of a new service element hosted by the server 24, it automatically performs the following registration process:

It contacts the description server 21. After performing an authorization procedure, it transfers, as part of a communication 61, a service address of the new service element and description data assigned to the new service element to the description server 21. This description is, in contrast to the later described service descriptor, a rough, high level description of the service provide by the new service element. The end point of the communication 61 is the control unit 211 of the description server 21. The control unit 211 stores the received data in the database 29. In the following, it offers the new data to all service elements contacting the description server 21.

The service address delivered to the description server 21 may be the network address of the server 24. But it is also possible that it directly addresses the respective service element hosted by the server 24.

Further, the control unit 240 holds service descriptors of the service elements hosted by the server 24. The service descriptors describe how to communicate with the respective second service element. A service descriptor may comprise information about parameters, formats and contents of service requests which has to be used to invoke the service provided by the respective service element.

Further, it is also possible that data administrated by the central service data element are registered as available service.

To perform such functionality, the data server 25 comprises the service element 20. The service element 20 contains several service scripts 202 to 204 and a registration unit 201. The service scripts 202 to 204 describe that data of the database 29 which should be made available to service elements. Further, it also contains a description file describing the respective kind of service offered by the data. When detecting the installation of a new service script, the registration unit 201 performs following registration procedure:

It contacts the description server 21. It submits, as part of a communication 62, a resource address of the respective data to the description server 21. Further, it submits the service description. The control unit 211 stores the resource address and the associated description in the data base 29. In the following, the description server 21 offers the access to these data as service to the service elements contacting the description server 21.

To be informed about the available services of the service provision system 3, the service element 14 contacts the description server 21. It receives, as part of a communication 63, service description information offered by the description server 21. For example, it downloads the description files of the service elements 40 to 46. The description files may be, for example, encoded in an interface description language.

Then, the service element 14 selects one or several of these service elements by means of the service description information received from the description server 21. When receiving the selection information, the description server 21 replies the service address of the selected service elements.

The service element 14 accesses the server addressed by the received service address. For example, it accesses the server 24 for the service element 44. Such kind of request is handled by the control unit 240 of the server 24. It replies, as part of a communication 64, the service descriptor of the addressed service element, for example the service descriptor of the service element 44. By the information contained in the service descriptor, the service element 14 is in a position to generate service requests for invoking the respective service element.

For example, the service element 14 invokes the service element 44 by means of the fetched service descriptor. A corresponding service request is sent, as part of a communication 67, from the service element 14 to the service element 44. The service logic 441 is triggered and executes the service process of the service element 44. When executing this process, the service element 44 accesses the service data element, which is provided by the server 25, one or several times to retrieve the necessary processed data. Even, it transmits, as part of a communication 68, the results of the processing from the service element 44 to the service data element.

Having service processing finalized, the service logic 441 replies, as part of a communication 67, a resource address of the service data element to the service element 14. The resource address identifies service data, which represents results of the service processing, within the data structure of the database 29.

The service element 14 accesses the service data element, which is provided by the server 25, and transmits, as part of a communication 69, the received resource address to the service data element. The data management function 26 replies the addressed service data representing the results of the service processing performed by the service element 44.

But, it is also possible that the service logic 441 replies all the results or a part of the results within the communication 67.

Further, it is possible that security features are performed by the service element 44:

The service logic 441 comprises a service security element 445 assigning access rights to first service element. For example, the security element 445 performs an authentication and/or authorization procedure, when the service element 44 is invoked by one of the service elements 14 to 18. It compares the determined identity of the invoking service element with the entries of an access right allocation data base. According to these entries, it grants to different service elements different access rights.

Dependent on the granted access right, it performs the invoked service or rejects the provisioning of the service.

Further, following mechanism could be implemented:

A service element informs the requesting service element about the resource address and further informs the service data element about the identity of the invoking service element. Only, if both parts fit together, the service data element grants access to the requested service data.

Further, it is possible that the service provision system comprises a central service security element. This service security element is contacted by first service elements to gain a security ticket defining access rights to second service element. If a first service element contacts one of the second service elements, the respective second service element checks the security ticket of this first service element and grants access rights according to this security ticket.

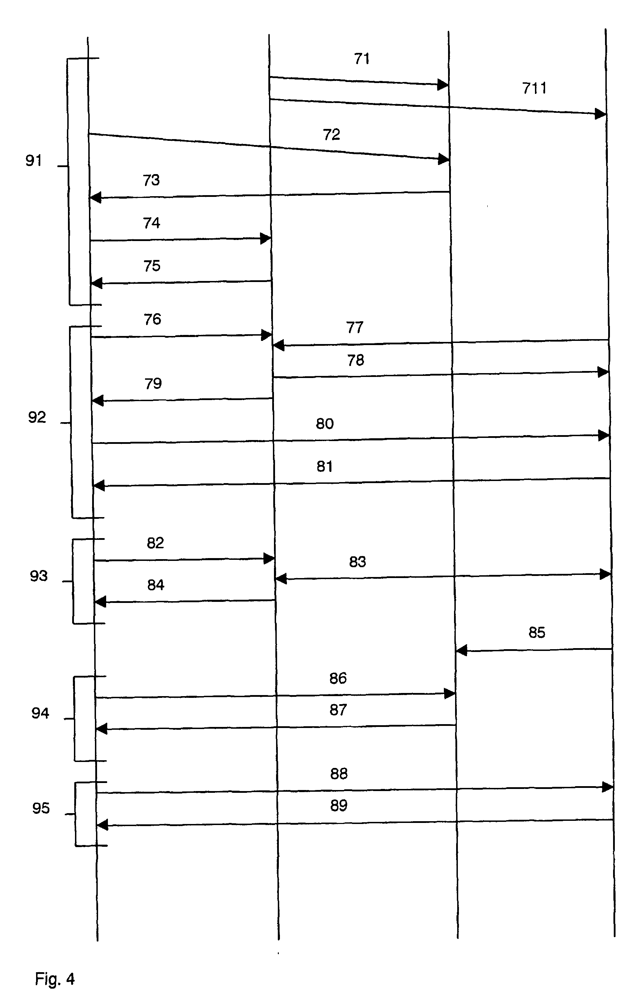

In the following, the details of the method for providing services to terminals of a communication network are described with fig. 4.

Fig. 4 shows a flow diagram representing the communication between the service element 14, the server 24, the description server 21 and the data server 25. Messages 71 to 89 and 711 are exchanged between the service element 14, the server 24, the description server 21 and the data server 25. The communication is divided in five phases 91 to 95.

Following steps are performed in the initialization phase 91:

The message 71 is send from the server 24 to the description server 21. This message contains registration information about the service element 44 and induces the description server 21 to register the service element 44.

Further, the message 711 is sent from the server 24 to the data server 25. The message 711 controls the creation and initialization of data objects in the data base 29. It requests the creation and initialization of a number of data objects used to hold the service data of the service element 44. Further improvements with respect to the installation of new service elements are achieved by this. But, it is also possible to do the initialization phase 91 without the transmission of the message 711.

The description server 21 has knowledge about where which service is available. Any first service element, which needs a service, will send a request to the service description server getting from there the location of service elements providing the requested service.

For example, the service element 14 sends the message 72 to the description server 21, the message 72 requests a specific kind of service. The description server 21 returns the message 73 containing the service address of the service element 44.

The service element 14 sends the request message 74 to the server 24 addressed by the gathered service address. The server 24 returns the message 75 comprises the service descriptor of the service element 44.

Now, the service element 14 has received all information necessary to be able to invoke the service offered by the service element 44.

In the following operation phases 92 and 93, the service element 14 uses the information obtained in the initialization phase 91 to invoke the service element 44:

The service element 14 sends the service request message 76 to the server 24. Messages 77 are exchanged between the server 24 and the data server 25 for exchanging service data necessary for the execution of the service process. The message 78 transmits the generated service data from the server 24 to the data server 25. The message 79 returns the resource address of the generated service data to the requesting service element 14. The service element 14 sends a retrieve message 80 containing the resource address to the data server 25. The data server 25 returns the service data generated by the service element 44.

Alternatively, following procedure is executed: the service element 14 sends the service request message 82 to the server 24. The service element 44 executes the service process while exchanging messages 83 with the data server 25. The message 84 returns the generated service data to the service element 14.

In the following, further operation phases may be carried out.

Beside the above described initialization phase 91, a further kind of initialization phase may be carried out between the service element 14, the description server 21 and the data server 85.

The message 85 requests the registration of a data service. This data service comprises a set of data of the database 92 which should become commonly available within the domain of the service provision system 3. The data server 25 transmits an associated resource address identifying the service data element 25 as service resource to the description server 21.

The message 86 requests information about a specific data service. The message 87 returns the resource address of the corresponding data.

The service element 14 invokes this data service in following operation phases, for example in the operation phase 95:

The service element 14 sends the message 88 containing the received resource address to the data server 25. The data server 25 returns the message 89 containing the requested data.

In the following, further operation phases may be carried out.

## Claims

1. A service provision system (3) for use with a communication network (1) to support the provisioning of services to terminals (31 to 36) of the communication network (1), wherein the communication network (1) comprises a plurality of network elements (11, 12, 13),
a description server (21) for offering service addresses of second service elements (40 to 46) to first service elements (14 to 18) assigned to network elements (11 to 13) of the communication network (1); and several second service elements (40 to 46) for providing services to first service elements (14 to 18),
**characterized in**
**that** the service provision system (3) comprises a central service data element (25) for holding service data of the second service elements (40 to 46), wherein said service data are data of service functions of the respective second service elements stored separately from the respective service function and/or data generated by the second service elements when being contacted by a first service element.

2. The service provision system (3) of claim 1,
**characterized in**
**that** the service provision system (3) comprises one or several server (22, 23, 24), each server (22, 23, 24) providing one or several of the second service elements (40 to 46), wherein the second service elements (40 to 46) are service applications providing telecommunication services and the first service elements (14 to 18) are network element applications.

3. The service provision system (3) according to claim 1,
**characterized in**
**that** the second service elements (40 to 46) are adapted to contact the description server (21) for performing a service registration process; and the description server (21) is adapted to offer service addresses and descriptions of registered second service elements (40 to 46).

4. The service provision system according to claim 1,
**characterized in**
**that** the central service data element (25) is adapted to administrate and store service data of the second service elements (40 to 46), wherein stored service data are data of service functions of the respective second service elements separated from the respective service function and stored separately from the respective service function; and the second service elements (40 to 46) are adapted to access data of service functions by invoking the central service data element (25) via a common interface (52).

5. The service provision system (3) according to claim 1,
**characterized in**
**that** each second service element (40 to 46) comprises a security element (445) assigning access rights to first service elements (14 to 18)

6. The service provision system (3) according to claim 1,
**characterized in**
**that** the service provision system (3) comprises a service security element for providing security tickets to first service elements (14 to 18), wherein second service elements (40 to 46) grant access rights according to security tickets.

7. Network element (11 to 13) for use with a communications network (1) to provide telecommunication services to a plurality of terminals (31 to 36), wherein the network element (11 to 13) comprises one or several first service elements (14 to 18) each adapted for: contacting a description server (21) which offers service addresses of a plurality of second service elements (40 to 46), and contacting one or several of the second service elements (40 to 46),
**characterized in**
**that** each of the one or several first service elements (14 to 18) is adapted for accessing service data assigned to second service elements (40 to 46) by invoking a central service data element (25), wherein said service data are data of service functions of the respective second service elements stored separately from the respective service function and/or data generated by the second service elements when being contacted by a first service element.

8. Network element (11 to 13) according to claim 7,
**characterized in**
**that** the first service element (14 to 18) is adapted to interact with second service elements (40 to 46) via a first interface and to interact with the central service data element (25) via a different second interface (52).

9. The network element (11 to 13) according to claim 7,
**characterized in**
**that** the first network element (14 to 18) is further adapted for: selecting one or several second service elements (40 to 46) by means of service description information received from the description server (21); receiving a service address of the selected second service element (40 to 46); accessing the server (22 to 24) addressed by the received service address and fetching a service descriptor of the selected second service element (40 to 46), the service descriptor describes how to communicate with the second service element (40 to 46); and invoking the second service element (40 to 46) by means of the fetched service descriptor.

10. A method for providing services to terminals (31 to 36) of a communication network (1), that the method comprises the steps of:
contacting a service description server (21) by a first service element (14 to 18) assigned to a corresponding network element (11 to 13) of the communication network (1);
offering a service address of a corresponding second service element (40 to 46) by the service description server (21);
contacting the second service element (40 to 46) by the first service element (14 to 18);
and generating, by the second service element, service data,
**characterized in**
**that** the method comprises the further steps of transmitting said service data to a central service data element (25);
returning a resource address to the first service element (14 to 18); and
accessing said service data by the first service element (14 to 18) by transmitting said resource address to said service data element (25).

## Patentansprüche

1. Ein Dienstbereitstellungs-System (3) zur Verwendung in einem Kommunikationsnetz (1) zur Unterstützung der Bereitstellung von Diensten an Endgeräte (31 bis 36) des Kommunikationsnetzes (1), worin das Kommunikationsnetz (1) eine Vielzahl von Netzwerkelementen (11, 12, 13), einen Beschreibungs-Server (21) zum Anbieten von Dienstadressen zweiter Dienstelemente (40 bis 46) an erste Dienstelemente (14 bis 18), die Netzwerkelementen (11 bis 13) des Kommunikationsnetzes (1) zugeordnet sind, und mehrere zweite Dienstelemente (40 bis 46) zur Bereitstellung von Diensten an erste Dienstelemente (14 bis 18) enthält,
**dadurch gekennzeichnet, dass**
das Dienstbereitstellungs-System (3) ein zentrales Dienstdaten-Element (25) enthält, um Dienstdaten der zweiten Dienstelemente (40 bis 46) zu speichern, wobei die Dienstdaten Daten von Dienstfunktionen der entsprechenden zweiten Dienstelemente sind, die getrennt von der entsprechenden Dienstfunktion gespeichert werden und/oder Daten, die von den zweiten Dienstelementen erzeugt werden, wenn sie von einem ersten Dienstelement kontaktiert werden.

2. Das Dienstbereitstellungs-System (3) aus Anspruch 1,
**dadurch gekennzeichnet, dass**
das Dienstbereitstellungs-System (3) einen oder mehrere Server (22, 23, 24) enthält, wobei jeder Server (22, 23, 24) eines oder mehrere der zweiten Dienstelemente (40 bis 46) bereitstellt, wobei die zweiten Dienstelemente (40 bis 46) Dienst-Anwendungen sind, die Telekommunikationsdienste bereitstellen, und die ersten Dienstelemente (14 bis 18) Netzwerkelement-Anwendungen sind.

3. Das Dienstbereitstellungs-System (3) gemäß Anspruch 1,
**dadurch gekennzeichnet, dass**
die zweiten Dienstelemente (40 bis 46) so angepasst sind, dass sie den Beschreibungs-Server (21) kontaktieren, um einen Dienst-Registrierungs-Prozess durchzuführen, und der Beschreibungs-Server (21) so angepasst ist, dass er Dienstadressen und Beschreibungen von registrierten zweiten Dienstelementen (40 bis 46) liefert.

4. Das Dienstbereitstellungs-System gemäß Anspruch 1,
**dadurch gekennzeichnet, dass**
das zentrale Dienstdaten-Element (25) so angepasst ist, dass es Dienstdaten der zweiten Dienstelemente (40 bis 46) verwaltet und speichert, wobei gespeicherte Dienstdaten Daten von Dienstfunktionen der entsprechenden zweiten Dienstelemente sind, die von der entsprechenden Dienstfunktion getrennt sind und von der entsprechenden Dienstfunktion getrennt gespeichert werden, und die zweiten Dienstelemente (40 bis 46) so angepasst sind, dass sie auf Daten von Dienstfunktionen zugreifen, indem sie das zentrale Dienstdaten-Element (25) über eine allgemeine Schnittstelle (52) aufrufen.

5. Das Dienstbereitstellungs-System (3) gemäß Anspruch 1,
**dadurch gekennzeichnet, dass**
jedes zweite Dienstelement (40 bis 46) ein SicherheitsElement (445) enthält, das ersten Dienstelementen (14 bis 18) Zugriffsrechte zuweist.

6. Das Dienstbereitstellungs-System (3) gemäß Anspruch 1,
**dadurch gekennzeichnet, dass**
das Dienstbereitstellungs-System (3) ein Dienst-Sicherheitselement enthält, um ersten Dienstelementen (14 bis 18) Sicherheits-Tickets bereitzustellen, wobei zweite Dienstelemente (40 bis 46) Zugriffsrechte gemäß den Sicherheits-Tickets vergeben.

7. Netzwerkelement (11 bis 13) zur Verwendung in einem Kommunikationsnetz (1) zur Bereitstellung von Telekommunikationsdiensten an eine Vielzahl von Endgeräten (31 bis 36), worin das Netzwerkelement (11 bis 13) ein oder mehrere erste Dienstelemente (14 bis 18) enthält, von denen jedes für folgendes angepasst ist: Kontaktierung eines Beschreibungs-Servers (21), der Dienstadressen einer Vielzahl von zweiten Dienstelementen (40 bis 46) anbietet, und der eines oder mehrere der zweiten Dienstelemente (40 bis 46) kontaktiert,
**dadurch gekennzeichnet, dass**
jedes der einen oder mehreren ersten Dienstelemente (14 bis 18) so angepasst ist, dass es auf Dienstdaten zugreift, die zweiten Dienstelementen (40 bis 46) zugeordnet sind, indem es ein zentrales Dienstdaten-Element (25) aufruft, wobei die Dienstdaten Daten von Dienstfunktionen der entsprechenden zweiten Dienstelemente sind, die getrennt von der entsprechenden Dienstfunktion gespeichert werden und/oder Daten, die von den zweiten Dienstelementen erzeugt werden, wenn sie von einem ersten Dienstelement kontaktiert werden.

8. Netzwerkelement (11 bis 13) gemäß Anspruch 7,
**dadurch gekennzeichnet, dass**
das erste Dienstelement (14 bis 18) so angepasst ist, dass es mit zweiten Dienstelementen (40 bis 46) über eine erste Schnittstelle interagiert, und dass es mit dem zentralen Dienstdaten-Element (25) über eine andere zweite Schnittstelle (52) interagiert.

9. Das Netzwerkelement (11 bis 13) gemäß Anspruch 7,
**dadurch gekennzeichnet, dass**
das erste Netzwerkelement (14 bis 18) weiterhin für folgendes angepasst ist: Auswahl eines oder mehrerer Dienstelemente (40 bis 46) mittels Dienstbeschreibungs-Information, die vom Beschreibungs-Server (21) empfangen wird; Empfangen einer Dienstadresse des gewählten zweiten Dienstelementes (40 bis 46); Zugriff auf den Server (22 bis 24), der von der empfangenen Dienstadresse adressiert wird und Holen eines Dienst-Beschreibers des gewählten zweiten Dienstelementes (40 bis 46), wobei der Dienst-Beschreiber beschreibt, wie mit dem zweiten Dienstelement (40 bis 46) zu kommunizieren ist; und Aufruf des zweiten Dienstelementes (40 bis 46) mittels des geholten Dienst-Beschreibers.

10. Ein Verfahren zur Dienstbereitstellung an Endgeräte (31 bis 36) eines Kommunikationsnetzes (1), wobei das Verfahren die folgenden Schritte umfasst:
Kontaktieren eines Dienst-Beschreibungs-Servers (21) durch ein erstes Dienstelement (14 bis 18), das einem entsprechenden Netzwerkelement (11 bis 13) des Kommunikationsnetzes (1) zugeordnet ist;
Anbieten einer Dienstadresse eines entsprechenden zweiten Dienstelementes (40 bis 46) durch den
Beschreibungs-Server (21);
Kontaktieren des zweiten Dienstelementes (40 bis 46) durch das erste Dienstelement (14 bis 18);
und Erzeugen von Dienstdaten durch das zweite Dienstelement,
**dadurch gekennzeichnet, dass**
das Verfahren die weiteren Schritte des Sendens der Dienstdaten an ein zentrales Dienstdaten-Element (25), die Rückgabe einer Ressourcen-Adresse an das erste Dienstelement (14 bis 18) und den Zugriff auf die Dienstdaten durch das erste Dienstelement (14 bis 18) durch Senden der Ressourcen-Adresse an das erste Dienstdaten-Element (25) umfasst.

## Revendications

1. Système de prestation de services (3) destiné à être utilisé avec un réseau de communication (1) pour supporter la fourniture de services à des terminaux (31 à 36) du réseau de communication (1), dans lequel le réseau de communication (1) comprend une pluralité d'éléments de réseau (11, 12, 13), un serveur de description (21) pour offrir des adresses de service de deuxièmes éléments de service (40 à 46) à des premiers éléments de service (14 à 18) affectés à des éléments de réseau (11 à 13) du réseau de communication (1) ; et plusieurs deuxièmes éléments de service (40 à 46) pour fournir des services aux premiers éléments de service (14 à 18),
**caractérisé en ce que**
le système de prestation de service (3) comprend un élément de données de service central (25) pour gérer les données de service des deuxièmes éléments de service (40 à 46), dans lequel lesdites données de service sont des données de fonctions de service des deuxièmes éléments de service respectifs stockés séparément de la fonction de service respective et/ou des données générées par les deuxièmes éléments de service lorsqu'ils sont contactés par un premier élément de service.

2. Système de prestation de services (3) selon la revendication 1
**caractérisé en ce que**
le système de prestation de services (3) comprend un ou plusieurs serveurs (22, 23, 24), chaque serveur (22, 23, 24) fournissant un ou plusieurs des deuxièmes éléments de service (40 à 46), dans lequel les deuxièmes éléments de service (40 à 46) sont des applications de service fournissant des services de télécommunications et les premiers éléments de service (14 à 18) sont des applications d'élément de réseau.

3. Système de prestation de services (3) selon la revendication 1,
**caractérisé en ce que**
les deuxièmes éléments de service (40 à 46) sont adaptés pour contacter le serveur de description (21) pour réaliser un processus d'enregistrement de service ; et le serveur de description (21) est adapté pour offrir des adresses de service et des descriptions de deuxièmes éléments de service enregistrés (40 à 46).

4. Système de prestation de services selon la revendication 1,
**caractérisé en ce que**
l'élément de données de service central (25) est adapté pour administrer et stocker des données de service des deuxièmes éléments de service (40 à 46), dans lequel les données de service stockées sont des données de fonctions de service des deuxièmes éléments de service respectifs séparés de la fonction de service respective et stockées séparément de la fonction de service respective ; et les deuxièmes éléments de service (40 à 46) sont adaptés pour accéder aux données de fonctions de services en invoquant l'élément de données de service central (25) par le biais d'une interface commune (52).

5. Système de prestation de services (3) selon la revendication 1,
**caractérisé en ce que**
chaque deuxième élément de service (40 à 46) comprend un élément de sécurité (445) affectant des droits d'accès aux premiers éléments de service (14 à 18).

6. Système de prestation de services (3) selon la revendication 1,
**caractérisé en ce que**
le système de prestation de services (3) comprend un élément de sécurité de services pour fournir des tickets de sécurité aux premiers éléments de service (14 à 18), dans lequel les seconds éléments de service (40 à 46) accordent des droits d'accès selon les tickets de sécurité.

7. Elément de réseau (11 à 13) destiné à être utilisé avec un réseau de communication (1) pour fournir des services de télécommunication à une pluralité de terminaux (31 à 36), dans lequel l'élément de réseau (11 à 13) comprend un ou plusieurs premiers éléments de service (14 à 18) chacun adapté pour : contacter un serveur de description (21) qui offre des adresses de service d'une pluralité de deuxièmes éléments de service (40 à 46) et contacter un ou plusieurs des deuxièmes éléments de service (40 à 46),
**caractérisé en ce que**
chacun des un ou plusieurs premiers éléments de service (14 à 18) est adapté pour accéder à des données de service affectées à des deuxièmes éléments de service (40 à 46) en invoquant un élément de données de service central (25), dans lequel lesdites données de service sont des données de fonctions de service des deuxièmes éléments de service respectifs stockés séparément de la fonction de service respective et/ou des données générées par les deuxièmes éléments de service lorsqu'ils sont contactés par un premier élément de service.

8. Elément de réseau (11 à 13) selon la revendication 7,
**caractérisé en ce que**
le premier élément de service (14 à 18) est adapté pour interagir avec des deuxièmes éléments de service (40 à 46) par le biais d'une première interface et pour interagir avec l'élément de données de service central (25) par le biais d'une deuxième interface différente (52).

9. Elément de réseau (11 à 13) selon la revendication 7,
**caractérisé en ce que**
le premier élément de réseau (14 à 18) est en outre adapté pour : sélectionner un ou plusieurs deuxièmes éléments de service (40 à 46) au moyen d'informations de description de service reçues depuis le serveur de description (21) ; recevoir une adresse de service du deuxième élément de service sélectionné (40 à 46) ; accéder au serveur (22 à 24) adressé par l'adresse de service reçue et récupérer un descripteur de service du deuxième élément de service sélectionné (40 à 46), le descripteur de service décrit comment communiquer avec le deuxième élément de service (40 à 46) ; et invoquer le deuxième élément de service (40 à 46) au moyen du descripteur de service récupéré.

10. Procédé pour fournir des services à des terminaux (31 à 36) d'un réseau de communication (1), le procédé comprenant les étapes consistant à :
contacter un serveur de description de servie (21) par un premier élément de service (14 à 18) affecté à un élément de réseau correspondant (11 à 13) du réseau de communication (1) ;
offrir une adresse de service d'un deuxième élément de service (40 à 46) par le serveur de description de service (21) ;
contacter le deuxième élément de service (40 à 46) par le premier élément de service (14 à 18) ;
et générer, par le deuxième élément de service, des données de service,
**caractérisé en ce que**
le procédé comprend en outre les étapes consistant à transmettre lesdites données de service à un élément de données de service central (25) ;
renvoyer une adresse de ressource au premier élément de service (14 à 18) ; et
accéder auxdites données de service par le premier élément de service (14 à 18) en transmettant ladite adresse de ressource audit élément de données de service (25).
